# EUROPEAN PATENT APPLICATION

(11) **EP 2 031 258 A1**
(43) Date of publication of application: **04.03.2009**
(21) Application number: 07115248.2
(22) Date of filing: 29.08.2007
(51) Int. Cl.: F16C 11/12, F16F 1/18, F16F 1/368

(54) **Flexural joint**

(71) Applicant: Nederlandse Organisatie voor Toegepast- Natuurwetenschappelijk Onderzoek TNO, 2628 VK Delft (NL)
(72) Inventor: van de Wiel, Hubertus Johannes, 5212 VB Den Bosch (NL); van der Knaap, Albertus Clemens Maria, 5706 KX Helmond (NL); Willemsen, Dehlia Maria Christina, 5706 RZ Helmond (NL)
(74) Representative: Hatzmann, Martin

(57) **Abstract**

Flexural joint configured to provide at least one orthogonal rotational degree of freedom and configured to block at least one translational degree of freedom, wherein the flexural joint consists of composite fiber-reinforced material. There is also provided an assembly comprising at least a first element, a second element and at least one joint to connect the first and second element to each other, wherein the joint is preferably made in one piece with at least one of the first and second element.

## Description

The invention relates to a flexural joint.

Joints can be applied in many different applications and constructions, for example machinery, building construction, transport systems, medical devices, orthesis, prosthesis, and so on. In the present application, as an example, joints of vehicle suspension systems are described, however, the skilled person will appreciate that the joint can also be used in many other arrangements.

Known joints are metal hinges or ball joints, configured to provide certain degrees of rotational freedom whilst blocking certain translational degrees of freedom. Known joints contain various different parts, cooperating with each other, and are relatively difficult and time-consuming to assemble. Friction between the different joint parts can reduce the life time of the joint, as well as precision of joint operation. Besides, known joints can be relatively bulky and use up much space, particularly in case the joints are meant to receive high operational loads during operation.

The present invention aims to provide an improved joint, that can be strong, durable and preferably compact.

To this aim, according to an embodiment, there is provided a flexural joint configured to provide at least one orthogonal rotational degree of freedom and configured to block at least one translational degree of freedom. The flexural joint preferably consists of composite fiber-reinforced material.

In this way, durable, preferably light-weight, strong and compact joint can be provided. Preferably, the joint is made in one piece with one or more components that are to be coupled to each other by the joint. The joint can be made in one piece with at least one element that is to be coupled, by the joint, to another element, such that the integral joint provides at least one orthogonal rotational degree of freedom between the elements, blocks at least one translational degree of freedom between the elements.

For example, the joint can be configured to provide at least two orthogonal rotational degree of freedom, for example three orthogonal rotational degree of freedom.

Also, according to an embodiment, the joint can be configured to block at least two translational degrees of freedom, for example to block all translational degrees of freedom.

In a further embodiment, the join can contain one or more reinforcement fibers to limit said at least one translational degree of freedom, and to allow said at least one orthogonal rotational degree of freedom.

The flexural joint preferably comprises at least a part having unidirectional fibers, preferably being embedded in a flexible enclosure.

In a further embodiment, the flexural joint comprises at least a first part and a second part, the first part having one or more fibers extending in a different direction than one or more fibers of the second part.

According to an embodiment, the flexural joint comprises rigid sections being interconnected by the one or more reinforcement fibers to limit freedom of movement of the rigid sections with respect to each other, the one or more reinforcement fibers preferably being embedded in flexible material. For example, the flexural joint can comprise one-piece rigid element, being curved to provide subsequent joint sections that are pivotal with respect to each other.

According to a preferred embodiment, a durable joint can be obtained in case the joint comprises interlinked chain members, and fiber reinforcement interconnecting the chain members.

Such a joint can be excellent with respect to 'push and pull' operations.

According to a further embodiment, the joint comprises a first rigid chain member and a second rigid chain member, wherein each chain member as such is made of rigid composite material, for example FRP.

At least the first rigid encloses a respective chain member aperture, wherein part of the second chain member extends through the internal aperture of the first chain member, wherein one or more reinforcement fibers or fiber bundles, extending internal chain aperture of the first chain member, connect the second chain member to the first chain member.

For example, the joint can be provided with fiber reinforcement that is arranged to provide three rotational degrees of freedom of the second chain member with respect to the first chain member, the fiber reinforcement also being arranged to connect a part the second chain structure to the first chain member, such that at least two orthogonal translations of the part of the second chain member with respect to the first member are prevented.

Also, the fiber reinforcement that interconnects the chain members, is preferably (but not necessarily) embedded in a flexible enclosure or flexible material, preferably a resilient material.

The joint can integrally comprise a rigid frame part, a flexible part comprising flexible material, and fiber reinforcement, the fiber reinforcement being arranged to provide a number of orthogonal rotational degrees of freedom of the flexible part with respect to the rigid frame part, while blocking translational freedom between the flexible part and the rigid frame part. For example, the joint can comprise a fiber web provided with first and second fiber parts, wherein a first fiber part extends through flexible material in a first direction to block freedom of translation in the first direction, wherein the second fiber parts branch off from the first fiber part to block a freedom of translation in a second direction that is orthogonal to the first direction.

According to an embodiment, the flexural joint at least comprises a first fiber or fiber bundle, extending in a first direction, and at least two second fibers or fiber bundles extending divergently with respect to each other, wherein an average direction of the second fibers or fiber bundles is opposite to said first direction of the first fiber or fiber bundle.

There is also provided a method for manufacturing a flexural joint according to the invention, wherein the flexural joint is made completely from fiber-reinforced composite material.

In an embodiment, the joint can be applied in a vehicle suspension system. A function of a vehicle suspension system is to provide a connection between vehicle wheels and a vehicle chassis. Besides, a function of the system is to provide a comfortable and safe ride to vehicle passengers. Particularly, the suspension system can be configured to provide vertical compliance so that vehicle wheels can follow the road. The system can position the wheels, particularly at desired steering-, caster- and camber-angles with respect to the road surface, to control stability of the vehicle driving course. The suspension system also reacts to forces that are generated at the wheels, in the horizontal plane, for example longitudinal forces due to acceleration and deceleration of the vehicle. The corresponding wheel displacements and/or rotations are relatively stiff in comparison to vertical displacements that can be achieved. Moreover, the suspension can provide resistance to, or counteract, vehicle roll. The suspension system can provide wheel-road surface contact with minimal dynamic tyre loads, which is important for the so-called 'road holding' performance of the wheels. Primary functions of the wheel suspension can be found in "Fundamentals of vehicle dynamics", T.D. Gilespie, Society of Automotive Engineering, Inc., 1992.

For example, known systems include: the MacPherson wheel suspension, the double-wishbone suspension configuration, the multi-link wheel suspension, the General Motors Corvette suspension having two one-piece fiberglass composite leaf springs mounted between double whishbones, and the spring-knuckle configuration (see EP1 400 380 A2) that comprises a leaf spring that is integrated in a MacPherson configuration.

Known suspension systems have various disadvantages. The MacPherson system provides relatively little kinematic freedom to optimize various vehicle driving aspects such as vehicle behavior in turns, during braking, vertical dynamics et cetera. Besides, a large amount of friction operates on the damper of this system. This system can not provide a desired high level of vehicle handling performance in combination with a proper drive comfort.

The double-wishbone suspension configuration, which is an improvement of the MacPherson wheel suspension, has a more complex geometry and consists of a relatively large amount of different parts. However, the complexity of this system leads to significantly higher costs (both during the design, manufacturing and assembly of the system).

The known multi-link wheel suspension is a further known improvement, but has an even higher level of complexity than the double-wishbone suspension configuration, which makes the system one of the most expensive suspension systems currently available.

The above-mentioned Corvette suspension comprises a fiber reinforced leaf spring. Disadvantages of the known Corvette suspension are, that it is relatively expensive. Moreover, the known Corvette suspension system inherently couples anti-roll and vertical flexibility of the leaf spring. Thus, anti-roll and vertical flexibility can not be optimized independently, and it might require the addition of an anti-roll stabilization mechanism.

The mentioned spring-knuckle configuration is based on the MacPherson system and therefore also has some of the problems of that system. Moreover, the spring-knuckle configuration results in an increased bending load on the dampers, greatly deteriorating friction properties and thus harsness (leading to various further problems by itself), can lead to unstable and unpredictable steering behavior due to leaf spring deformation (due to relatively large roll centre displacements), and can lead to large lateral wheel displacements (due to leaf spring deformations) resulting in decrease of forward driving course stability when the wheels are bumped.

Application of a joint according to the present invention as part of a suspension system can overcome or reduce above-mentioned disadvantages relating to known suspension systems.

The present invention also provides an assembly comprising at least a first element, a second element and at least one joint according to the invention to connect the first and second element to each other, wherein the joint is preferably made in one piece with at least one of the first and second element. According to non-limiting embodiments, the first and second element may be part of: a building, a machine, a transportation system (for example a vehicle, aircraft, train or vessel), a medical device, an orthesis and/or prosthesis (for example to be worn and/or implanted by/in patients). Then, preferably, the first and/or second element are made of the same material as the joint.

Further advantageous embodiments of the invention are described in the dependent claims. These and other aspects of the invention will be apparent from and elucidated with reference to non-limiting embodiments described hereafter, shown in the drawings.
Fig. 1 is a perspective front view of an embodiment of a suspension system having a flexural joint;
Fig. 2 is a front view of the embodiment of Fig. 1, indicating vertical movement with dashed lines;
Fig. 3A is a detail of Fig. 2, after flexure deformation;
Fig. 3B schematically shows a front view of a joint of the suspension system of Fig. 1, wherein internal fibers are indicated by dashed lines;
Fig. 4 shows part of the embodiment of Fig. 1, showing transversal arm positions during roll movement and/or asymmetric bump excitations of the wheel(s);
Fig. 5 schematically shows a perspective front view of an alternative embodiment of a flexural joint comprising flexural joints and uni-directional fibres;
Fig. 6 schematically shows a further embodiment of a flexural joint, in perspective front view;
Fig. 7 schematically shows part of yet a further embodiment of a flexural joint;
Fig. 8 schematically shows part of another embodiment of a flexural joint;
Fig. 9A schematically shows part of yet another embodiment of a flexural joint comprising interlinked chain members;
Fig. 9B schematically shows part of a further embodiment of a flexural joint comprising interlinked chain members, in a perspective view;
Fig. 9C schematically shows part the embodiment of Fig. 9B, in side view;
Fig. 10 shows a detail of an embodiment comprising fibre bundles;
Fig. 11 shows the embodiment of Fig. 10 in a heave mode;
Fig. 12 is similar to Fig 11 and shows loss of contact with a support surface;
Fig. 13 is similar to Fig 11 indicating a body roll;
Fig. 14 shows another embodiment, in perspective view, comprising fiber bundles;
Fig. 15 shows part of the embodiment of Fig. 14;
Fig. 16 shows a detail of the embodiment of Fig. 14 in front view;
Figures 17A-17E show a perspective view, rear view, top view (in detail), perspective front view and front view (in detail), respectively, of a further suspension embodiment having a double wishbone configuration;
Figures 18A-18E show a perspective view, rear view, top view (in detail), perspective front view and front view (in detail), respectively, of a further suspension embodiment having a multi-link configuration;
Figures 19A-19E show a perspective view, front view, detail of a front view, top view and a detail in top view, respectively, of a further suspension embodiment for a rear wheel driven vehicle;
Fig. 20 shows another perspective view of part of the embodiment of Figures 19A-19E, in detail;
Fig. 21 schematically shows a non-limiting example of a flexural joint comprising interlinked chain members of part the system of Figures 19-20;
Fig. 22 shows the embodiment of Fig. 21 from a different perspective;
Fig. 23 shows a perspective view of an integral assembly comprising a subframe and part of a suspension system, of an embodiment;
Fig. 24 is a top view of the embodiment shown in Fig. 23; and
Fig. 25 is a perspective front view of part of a suspension system based on a MacPherson type of suspension.

Similar or corresponding features are denoted by similar or corresponding reference signs in this application.

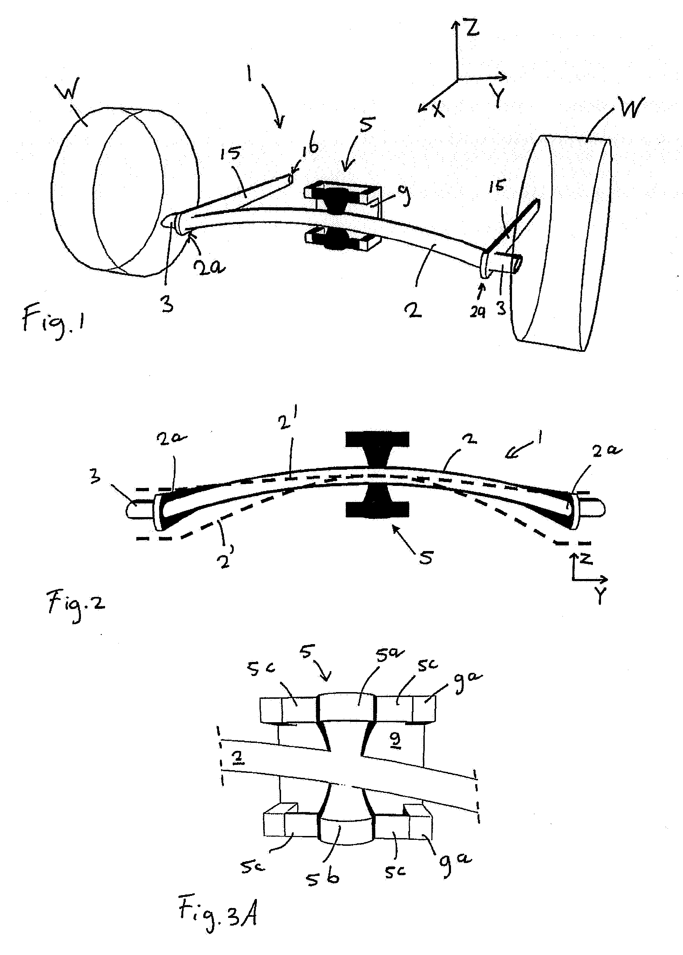

Figures 1-3 show an embodiment comprising a vehicle suspension system 1, comprising elements (for example a leaf spring and a chassis part) coupled to each other by one or more flexural joints. The skilled person will appreciate that the joint can also be integrated, in similar manner, for example, to couple elements of a building, a machine, a transportation system (for example a vehicle, aircraft, train or vessel), a medical device, an orthesis and/or prosthesis (for example to be worn and/or implanted by/in patients). Thus, the present patent application is not limited to the field of vehicle suspension systems as such.

In the following embodiments, the system 1 can be configured to provide a connection between vehicle wheels W and a vehicle chassis. For clarity of the drawing, a major part of the vehicle is not shown in the drawing; to the skilled person, the general configuration of a vehicle and vehicle chassis is commonly known. In the present drawings, three orthogonal directions are indicated by arrows X, Y and Z, indicating, respectively, a longitudinal vehicle chassis direction, a transversal vehicle chassis direction and a vertical direction (particularly when a respective vehicle is in a stationary, level, mode). For example, the longitudinal direction X can be a vehicle driving direction, or a direction opposite to the vehicle driving direction. The system 1 comprises one or more joints according to various embodiments of the invention.

### General suspension system design

According to embodiments, the suspension system can position two vehicle wheels W (for example two front wheels or two rear wheels), for example (i,.e.not necessarily) at desired steering-, caster- and camber-angles, a wheel base, track width, with respect to a road surface and chassis, or at a fixed (for example welded) position, to control stability of the vehicle route. Moreover, considering the suspension system in combination with further suspension linkages and/or wishbones, for example, the system 1 can contribute to the control of wheel camber-, caster and steering angles (see below). In an embodiment, a vehicle having four wheels can be provided with two such suspension systems 1 (one for each set of wheels), if desired. Alternatively, a vehicle can have only one suspension system 1 for one set of wheels, wherein the remaining wheels are suspended using a different type of suspension.

For example, the embodiment of Fig. 1 can position the wheels W at track width and wheel base (but not steering-, caster- and camber-angles).

The present suspension system 1 has been provided with an elongated leaf spring 2 configured to be coupled at opposite ends 2a to vehicle wheel holding structures or wheel axle carriers (not depicted in Fig. 1) of a vehicle. For example, to that aim, the ends 2a of the leaf spring can integrally include wheel axle carriers coupling members 3, for example extending sideways (in Y direction, see Fig. 2) or differently. In the present embodiment, said coupling members 3 are made in one-piece with the leaf spring 2, and preferably are made of the same composition as a leaf spring 2 composition.

After assembly, a main part 2 of the leaf spring extends in substantial transversal vehicle direction Y, for example between the two wheels W (see Fig. 1, 2), and substantially perpendicular to a longitudinal vehicle chassis direction X. Also, in the present embodiment, the spring 2 can preferably extend substantially below the horizontal level of centre lines of the wheels W, however, this is not essential.

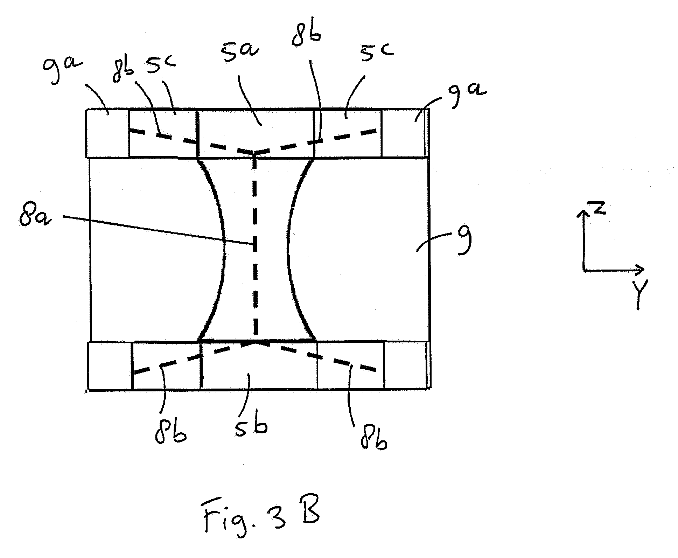

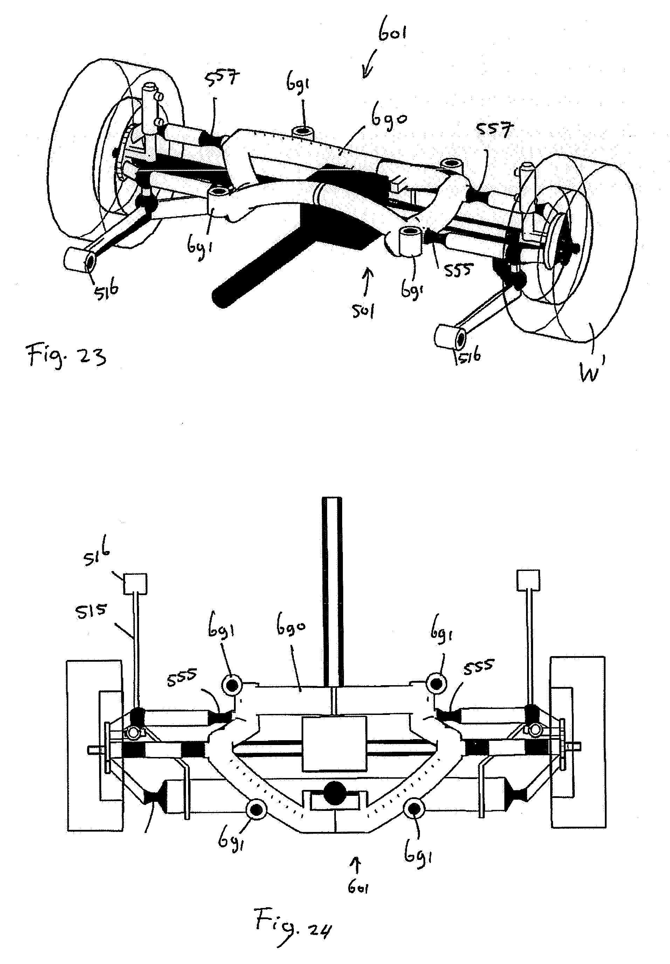

The leaf spring 2 is preferably integrally provided with a first flexural joint 5, the joint 5 containing one or more reinforcement fibers, to limit a translational degree of movement in at least one predetermined direction, and the joint 5 being configured for coupling the leaf spring 2 to a rigid frame part 9. For example, the latter rigid part 9 can be an assembly part configured to connect the joint 5 to a vehicle chassis or subframe (for example by bolting). Alternatively (see below, concerning Figures 23-24), the rigid member 9 can be part of a subframe that is to be mounted to the vehicle chassis. The skilled person will appreciate that said rigid part 9 can be configured and arranged in various different ways. Fig. 3B indicates an example showing an internal fiber configuration of the joint 5 by dashed lines 8, wherein the integral spring 2 has not been depicted.

Preferably, as in the present embodiment, the leaf spring 2 is provided with transversal arms (control members) 15, extending transversally from leaf spring end parts 2a, the transversal arms 15 being configured to be mounted to the vehicle chassis (for example using respective (line) pivot means at end parts 16 of the arms 15). For example, free ends of the arms 15 (i.e., the ends that are spaced-apart from the spring 2) can be configured to pivot with respect to the chassis after assembly thereto around respective lateral pivot axes extending in transversal vehicle chassis directions Y. To this aim, each arm 15 can include a ball joint or ball joint part, or can include a lateral pivot axis, or be configured to receive a lateral pivot axis via respective pivot axis receivers 16 as in the present embodiment.

Preferably each transversal arm 15 is integral with the leaf spring 2. More preferably, each arm 15 is made in one piece with the leaf spring 2. For example, the arms 15 can be made from the same material as the leaf spring 2, for example in a combined single manufacturing process.

The transversal arms 15 can have various shapes and dimensions as will be appreciated by the skilled person. For example, these arms 15 can be elongated elements, coupling rods, plates or strips, or have a different configuration. Preferably, as in the present embodiment, the lateral thickness of the arms 15 (measured in said Y direction) is substantially smaller than their vertical thickness (measured in the Z direction). The transversal arms 15 can include angles of about 90° with the leaf spring end parts 2a as in the present embodiment, or different angles. Besides, after assembly (when the respective vehicle is in a stationary state, resting with the wheels W on a horizontal surface), centre lines of the elongated transversal arms 15 can extend substantially horizontally, or include certain angles with a horizontal plane (for example angles in the range of about 0-30°).The skilled person will understand how this contributes to the suspension, anti-dive or squat performance during braking or acceleration.

The leaf spring 2 as such can be configured in various ways. For example, the leaf spring 2 can be one or more of:
- a hollow configuration;
- made of composite material, preferably fiber reinforced material;
- made of one or more light weight metals, alloys and/or plastics, or a combination thereof;
- having an elliptical shape;
- being tapered and/or having a varying transversal cross-section viewed along a longitudinal direction of the spring;
- having a transversal thickness that is larger than a vertical thickness.

In the present embodiment, the elongated leaf spring 2 is preferably made of composite fiber reinforced material, preferably hollow, and has an elliptical shaped when viewed in transversal cross-section. The transversal arms 15 are preferably also made of composite fiber reinforced material. The same holds for the coupling members 3. Besides, in the present embodiment, the transversal arms 15 are solid (i.e. not hollow). The coupling members 3 can be hollow, and can have various shapes, for example having the same transversal cross-section (elliptical) as the leaf spring 2.

Said composite, fiber reinforced, material, preferably is a composite of plastic and fiber material (also commonly known as FRP, 'Fiber Reinforced Plastic'). For example, the plastic can be a suitable epoxy or vinyl ester or a different type of suitable plastic.

The fiber reinforcement of the composite can include one or more of: fiberglass, carbon fibers, aramid fibers, and/or other types of reinforcement fibers. For example, in this application, the fibers can be flexible unidirectional fibers that are highly resistant to longitudinal tension. Such FPR composite can provide a much better energy storage (at least 10 times better) per volume unit than steel, and has a much lower weight than steel.

The leaf spring 2, and preferably also the transversal arms 15 and coupling members 3, can include FRP material, wherein the fibers are arranged to provide suitable leaf spring characteristics, such as a suitable rigidity, resilience, strength and durability. The skilled person will appreciate how the select the composition of the FRP composite to provide desired suspension leaf spring characteristics. In a further embodiment, the leaf spring 2 can include reinforcement fibers that are randomly dispersed, the fibers having random fiber orientations. Besides, as an example, the leaf spring 2 as such can include reinforcement fibers that run in substantially longitudinal leaf spring directions. Also, in the composite, the fibers can be dispersed substantially homogeneously in the plastic (also called ' matrix'), or for example near the outer surface of the spring 2, or in a different manner, to provide desired spring characteristics in various directions.

Preferably, the transversal arms 15 each contain fibers arranged to provide high rigidity (i.e. being inflexible, stiff) and strength, particularly in vertical direction Z. The transversal arms 15 can have a certain resiliency or flexibility, or a bending flexibility, in their lateral directions (i.e. directions

The present leaf spring 2 is (slightly) curved, viewed in front view, being mirror-symmetrical with respect to a vertical transversal centre plane. In top view, the leaf spring 2 preferably extends along a straight line. After assembly, preferably, a centre part of the leaf spring 2 is located at a higher position than the opposite end parts 2a (that are coupled to said wheel holding structures/ wheel axle carriers).

The leaf spring 2 preferably has a transversal thickness that is larger than a vertical thickness (measured in a direction indicated by arrows Z in the drawing), as will be explained below.

In this way a light-weight and durable suspension system 1 can be provided, which can improve vehicle assembly speed and costs. After its manufacture, the one-piece integral suspension system structure 1 can simply be mounted to a vehicle chassis part, particularly by coupling the two transversal arms 15 and the rigid member 9 to the chassis, reducing vehicle assembly time and costs. In a more preferred embodiment, the one-piece integral suspension system structure 1 can be made integrally with a vehicle subframe (see below, regarding Fig. 23, 24) leading to further improvement of vehicle assembly speed and costs. The system 1 can provide a high degree of decoupling of various suspension aspects, such as anti-roll, vertical flexibility (heave), anti-pitch.

### Flexural Joint

As is mentioned above, the leaf spring 2 is preferably integrally provided with a (single) first flexural joint 5. An embodiment of the joint 5 is shown in more detail in Figures 3A, 3B. As is mentioned before, the joint can have many different applications, for example outside the field of vehicle suspension systems. In the following, the leaf spring 2 is a first element, and a rigid frame part 9 is the second element, the first and second element (or member) being coupled to each other by the flexural joint. The joint is configured to provide at least one orthogonal rotational degree of freedom and configured to block at least one translational degree of freedom.

In the present embodiment, the joint 5 is preferably located in the longitudinal middle of the leaf spring 2, at equal distances from the spring ends 2a. The joint 5 can be integrally provided with a rigid support structure or frame part 9, 9a, for mounting the joint 5 to a vehicle chassis. As follows from the drawings, in the present embodiment, the middle part or section of the leaf spring 2 can extend through the joint 5, for example centrally there-through. The leaf spring 2 can also be arranged in a different manner with respect to the joint 5. The present joint 5 is particularly configured to provide a type of ball-joint functionality.

Furthermore, in the present embodiment, the first integral flexural joint 5 is arranged for coupling the leaf spring to a frame part, such that the flexural joint can allow at least one rotational degree of freedom of movement of the leaf spring 2 with respect to the frame part 9 during operation.

The joint 5 as such preferably contains reinforcement fibers (see Fig. 3B, showing an internal fiber configuration by dashed lines 8), to limit a translational degree of movement in at least one predetermined direction (i.e. the Z-direction in this embodiment), the joint 5 being configured for coupling a first element (the leaf spring 2) to a second element (the rigid frame part 9). More particularly, the present joint 5 is arranged to provide three orthogonal rotational degrees of freedom, whilst blocking two translational degree of freedom, namely, in the vertical direction Z and the longitudinal leaf spring direction Y.

Particularly, the joint 5 comprises fiber reinforcement having a fiber arrangement and orientation, configured to provide the joint a predetermined flexural and translational rigidity.

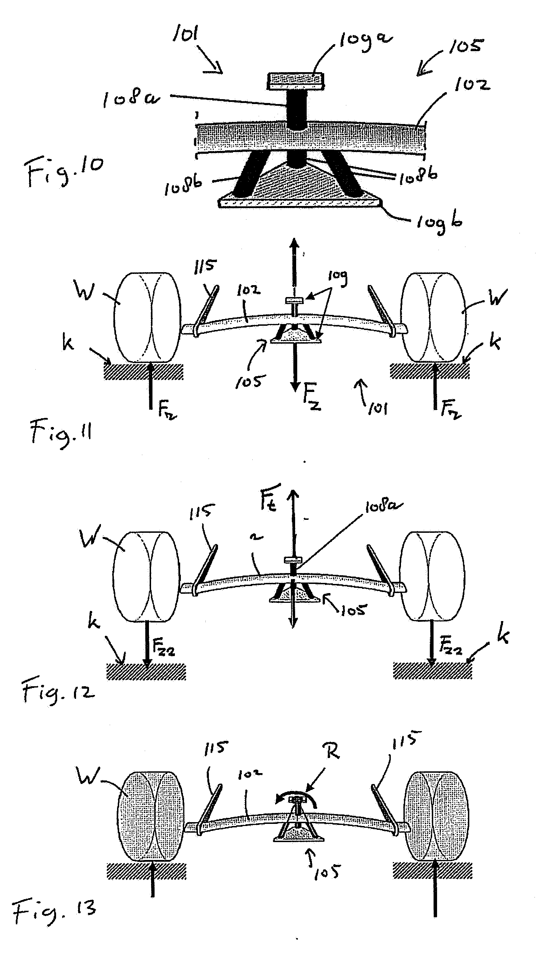

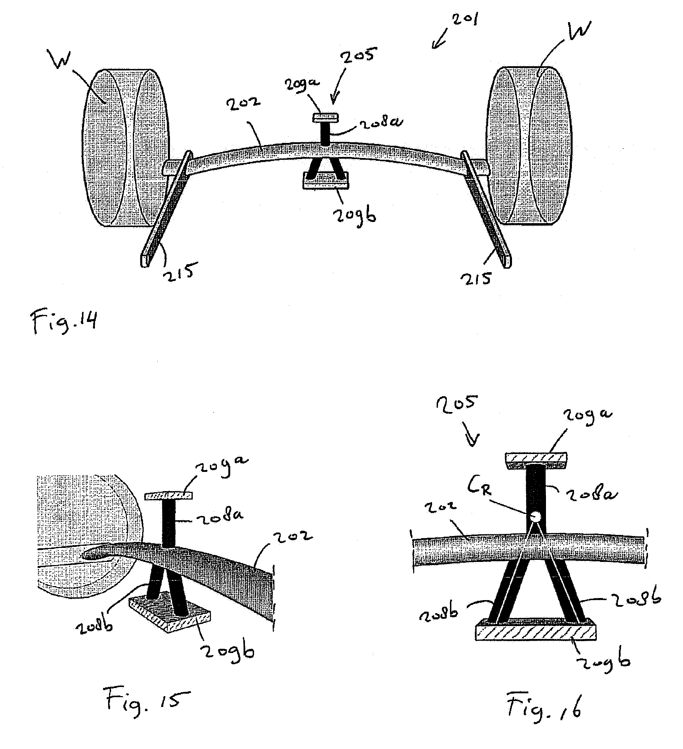

Preferably, the joint 5 is provided with fiber parts 8, arranged to prevent the vertical movement of the elongated spring 2 with respect to the rigid frame part 9, 9a. More particularly, the present joint 5 has fiber reinforcement 8 that is arranged to provide three orthogonal rotational degrees of freedom (allowing certain rotation of the central part of the leaf spring 2 with respect to the rigid frame part 9 around each of the orthogonal X-, Y- and Z-axis). For example, these fiber parts 8 can extend between the middle part of the leaf spring 2 and the rigid frame 9 (see Fig. 3B, or the alternative embodiment of Fig. 10 or 15) in an arrangement designed to prevent said vertical movement, and to allow said freedom of rotation, and to optionally allow a longitudinal movement in the X-direction. For example the fiber arrangement 8 can be configured to allow said rotation (of the middle spring part) in a range of at least -10⁰ to +10⁰ (minus 10 degrees to plus 10 degrees) with respect to (about) each of the axis X, Y, Z. In a further embodiment, the fiber reinforcement part 8 can be firmly connected to both the leaf spring 2 and the rigid frame 9, for example by being partly embedded therein.

For example, the flexural joint can comprise at least a first part 8a and a second part 8b, the first part having one or more fibers extending in a different direction than one or more fibers of the second part, for example such that the fibers of the first part extend in a first direction and fibers of the second part extend in a second direction that differs from the first direction.

For example, the first flexural joint 5 can have unidirectional fiber parts 8. Preferably, the joint 5 contains one or more first fiber parts 8a, extending substantially in vertical direction Z, for example (but not necessarily) through a centre joint part 5a, to limit translational movement in that direction Z. In an embodiment, these first fiber parts 8a can intersect the integral middle part of the elongated leaf spring 2, and can attach to the elongated spring 2. Preferably, the first fiber parts 8a extend to (and also for example through) the exact longitudinal centre point of the leaf spring 2.

Alternatively (as in the Fig. 10, 14 embodiments), a plurality or set of fiber parts can be provided to limit translational freedom in a predetermined direction Z, wherein the fiber parts extend in different directions, such that their average direction coincides with the translational direction to be limited. In other words: the fiber parts extending in different directions can cooperate to limit one or more translational (preferably orthogonal) directions.

The present first joint 5 (see Fig. 3B) also contains second fiber parts 8b, extending substantially sideways (in Fig. 3B substantially to the right and left) with respect to the first fiber parts 8a. The second fiber parts 8b can limit translational degree of freedom of the joint 5 (i.e., of the spring 2 with respect to the rigid frame 9) in the orthogonal Y direction. In a further embodiment, the second fiber parts 8b can still allow a certain translational freedom of movement of the joint, parallel to the X direction, with respect to the rigid structure or frame part 9, 9a.

For example, all first and second fiber parts 8a, 8b can extend or be laid along the same virtual plane, for example the vertical YZ-plane, as in the present non-limiting embodiment.

The second fiber parts 8b are preferably linked (with/at inner ends) to the first fiber part 8a, and can be linked (with/a outer ends) to the rigid frame part 9, 9a. Particularly, the first and second fiber parts form a sort of I-shaped configuration (when viewed in front view). In the present embodiment, the second fiber parts 8a, 8b include small angles with virtual horizontal planes, such that upper second fiber parts 8b extend slightly upwardly with respect to the central first fiber part 8a, and such that lower second fiber parts 8b extend slightly downwardly with respect to the central first part 8a.

The second fiber parts 8b are preferably linked to the first fiber parts 8a; for example, the first and second fiber parts can be integrated with each other in a fiber web 8a, 8b. Each of the first and second fiber parts 8a, 8b preferably comprises unidirectional fibers, and/or for example one or more fibers or fiber bundles. For example, the web 8 can consist of a fiber bundle, the bundle having a middle section providing the first fiber parts 8a and having branched off second sections that provide the second fiber parts 8b.

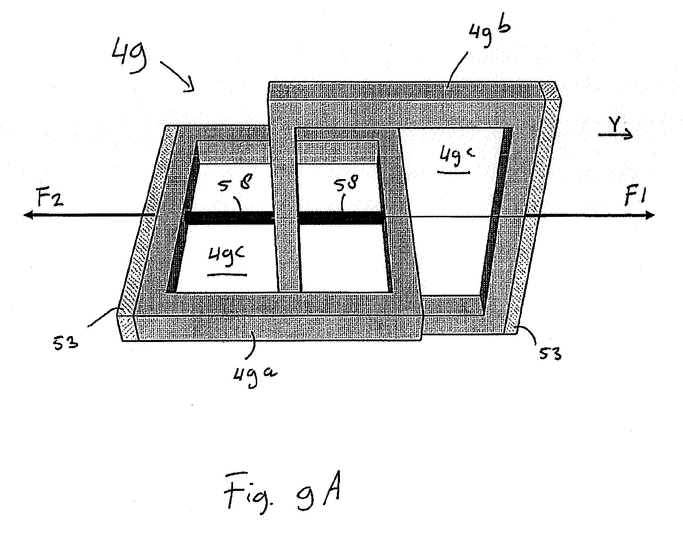

In the present embodiment of Fig. 1-3, the fibers 8 are embedded in a flexible enclosure 5a, 5b, 5c. The enclosure 5a, 5b, 5c can protect the fibers 8, and may also provide a certain (relatively low) resiliency to the joint if desired. Figures 9A-9C, 10 (see below) show alternative flexural joint embodiments that may also (but not necessarily) be provided with such enclosures (not shown).

As an example, the joint 5 can include an integral flexible upper enclosure part 5a extending upwardly from the leaf spring 2 and an integral flexible lower enclosure part 5b extending in opposite direction with respect to the upper part 5a (i.e. downwardly). In the present embodiment, both the upper and lower part 5a, 5b have substantially fruscoconical shapes, however, these parts can also have other shapes. The first fiber part 8a can be embedded in these upper and lower parts 5a, 5b.

The flexural joint 5 can comprise flexible (preferably resilient) support members 5c being integrally connected to rigid support members 9a of the rigid part 9. Both the flexible and rigid support 5c, 9a members can have various shapes and dimensions; for example, in the present embodiment they are particularly arranged to hold the flexible parts 5a, 5b and leaf spring 2 on a certain distance from a front surface of the rigid frame part 9.

For example, each central flexible part 5a, 5b can contain two flexible (preferably resilient) support members 5c extending in opposite, transversal, directions Y, to enclose parts of said second fiber parts 8b (see Fig. 3B).

In a further embodiment, the flexible support members 5c and the fibers 8b running there-through are configured to allow certain (lateral) movement of the central joint parts 5a, 5b, parallel to the X direction, with respect to the rigid structure or frame part 9, 9a. For example, each flexible support member 5c as such can be a leaf spring. To this aim, for example, each flexible support members 5c can be sufficiently thin measured in that X direction to (resiliently) allow a certain degree of bending of the member 5c in that direction X.

Also, preferably, the flexible support members 5c are configured (for example dimensioned) to counteract or prevent allow certain translational (vertical) movement of the central joint parts 5a, 5b, parallel to the Z direction, with respect to the rigid structure or frame part 9, 9a. To this aim, for example, each flexible support members 5c can be sufficiently thick measured in that vertical direction to prevent substantial vertical bending of the member 5c during normal vehicle driving conditions (i.e. after mounting).

Besides, the flexural joint 5 can be configured in various ways and can have various shapes. For example, in the present embodiment (Figs. 1-3), the joint can be made of one or more resilient fiber containing/fiber holding materials (i.e. matrix) 5a, 5b, 5c, for example elastic or resilient plastic, an elastomer, rubber (natural or synthetic), a flexible cured resin, or a different type of material. During manufacture, the fiber reinforcement 8 can be laid or applied in a suitable manner (for example in a curable matrix material 5) to achieve the above-described fiber configuration.

The first flexural joint 5 can be made completely in one piece with the leaf spring 2. In other words, the leaf spring 2 and its central flexural joint 5 can be manufactured in one piece, for example in a suitable FRP manufacturing process (known as such to the skilled person). For example, the joint 5 can be made of the same FRP as the leaf spring 2, wherein the joint includes a same type of fibers and optionally a same plastic as the spring 2. Alternatively, the joint 5 as such can be made of a different composition than the leaf spring 2, for example containing a different fiber type than the leaf spring 2.

Also, preferably, the first flexural joint 5 is completely made in one piece with the rigid frame part 9. For example, the Flexural joint 5 and rigid part 9, 9a can be manufactured in one piece, for example in a suitable FRP manufacturing process. Also, the joint 5 can be made of the same FRP as the rigid part 9, 9a, wherein the joint includes a same type of fibers and a same plastic as the frame part 9, 9a. Alternatively, the joint 5 as such can be made of a different composition than the frame part 9, 9a, for example containing a different plastic and/or a different fiber type than the part 9, 9a.

### Operation

The integral fiber reinforcement arrangement 8 of the flexural joint 5 can durably connect the leaf spring 2, at least its central part, to a vehicle chassis. Besides, the joint 5 (particularly its fiber reinforcement arrangement 8) can provide good rotational freedom of movement to the respective central section of the elongated spring 2, and can prevent translation of the spring in vertical (Z) and longitudinal (Y) directions. As follows from Fig. 1, the two transversal arms 15 can limit the remaining translational freedom of movement degree (of the spring 2 with respect to a chassis), in the X-direction. Thus, during operation of the suspension system 1, the flexural joint 5 can take up forces acting in lateral chassis directions (Y directions), and the transversal arms can take up forces acting in longitudinal chassis directions (X directions).

Figure 2 indicates, with dashed lines 2', a heave mode or deflection during suspension operation. Since only a single flexural joint 5 is provided that couples the elongated leaf spring at its centre to a rigid vehicle chassis (via the rigid part 9), the leaf spring 2 can provide good, independent, heave control. Moreover, as is shown in Fig. 3A, the joint 5 still allows proper pivoting of the leaf spring 2 during vehicle roll, without substantially counteracting that leaf spring movement.

For example, a function of the spring 2 is to provide vertical flexibility (i.e. heave; more particularly resiliency). Particularly, in the present embodiment, this flexibility (i.e. resiliency) can be determined by the composition (FRP) of the spring 2, and also by the vertical thickness of the spring 2. Another function of the spring is to provide anti-roll (i.e. to counteract vehicle roll/chassis roll).

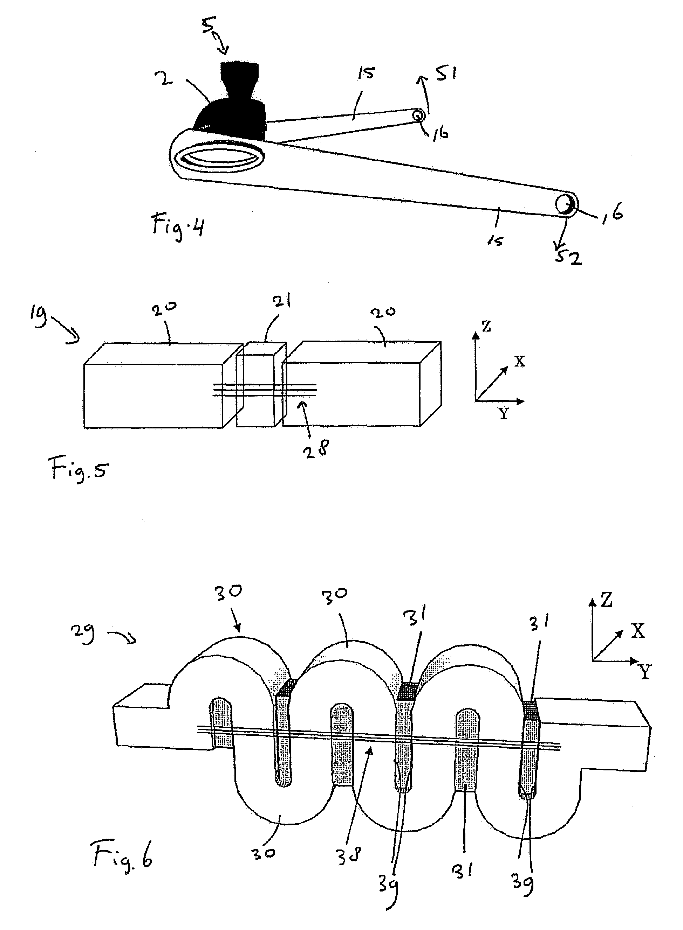

As is mentioned above, after assembly, the transversal arms 15 are coupled by their free ends to the vehicle chassis (using respective pivot means). Vehicle chassis roll will consequently induce opposite swinging of the transversal arms 15 (see Fig. 4, wherein arrow S1 indicates upward pivoting of one of the arms 15, and arrow S2 downwards pivoting of the other arm 15) leading to torsion of the intermediate main leaf spring part 2 (extending between the arms 15). The composition of the spring 2 and transversal thickness (measured in the X-direction),cross-sectional geometry and length between the transversal arms, of the main leaf spring part 2 are main factors in determining leaf spring torsion.

The present suspension configuration can provide a very good decoupling of suspension system roll characteristics with respect to suspension system heave characteristics and anti-dive functionality, so that these suspension functions can be set (designed) relatively independently from each other . More particularly, depending for example on a type of vehicle (regarding dimensions, weight, etc.) to provide suspension to as well as desired suspension characteristics (comfortable, sportive-like, etc.), roll can be controlled by applying a suitable leaf spring transversal thickness, cross-sectional geometry and length (between the transversal arms), during suspension design. Similarly, heave can be controlled by providing a suitable leaf spring vertical thickness. As is mentioned above (and shown in the drawing), the present spring embodiment has a main part 2 (extending between the transversal arms 15) having a transversal thickness that is larger than its vertical thickness, so that the suspension system can provide more resistance to roll than to heave.

In a further embodiment, to improve roll-resistance, extra resistance to leaf spring torsion (i.e. torsion-rigidity) can be provided by including reinforcement fibers being orientated parallel to main torsion-tension directions, in the main leaf spring part 2.

In a further embodiment, the length of the transversal arms 15 can be adapted to provide a desired anti-roll operation of the suspension system 1. For example, shortening of these arms 15 will lead to increase of torsion-angles during a certain vehicle chassis roll.

Moreover, the transversal arms 15 can provide anti-dive functionality to the suspension system 1 (i.e. during vehicle braking operation). The amount of anti-dive can simply be set, substantially independently of heave and roll characteristics, via applying a suitable mounting position of the arms 15 to the vehicle chassis (i.e. height above the ground).

### Further Flexural Joint Embodiments

Figures 5-10 show several non-limiting embodiments of flexural joints, that can be applied in a suspension system 1 or in other applications, for example instead of the first joint 5 of the embodiment of Figures 1-3. Besides, various applications of these joints will also be described, below.

Figure 5 shows an embodiment of a flexural joint 19 comprising rigid (fiber reinforced) sections 20 being interconnected by one or more reinforcement fibers or fiber bundles 28 to limit freedom of movement of the rigid sections 20 with respect to each other, the one or more reinforcement fibers 28 preferably being embedded in flexible material 21.

For example, each of the rigid sections 20 as such can be made of composite, fiber reinforced, material, preferably FRP. Therein, the fibers (not shown as such) can preferably be arranged to provide rigidity in three orthogonal directions X, Y, Z.

The intermediate, optional, flexible and preferably resilient material 21 can comprise elastic or resilient plastic, an elastomer, rubber (natural or synthetic), a flexible cured resin, or a different type of material. For example, the intermediate member 21 can be configured to flexibly or resiliently allow bending of the rigid members 20 with respect to each other, for example about the Z-axis and/or about the X-axis (see Fig. 5), and/or twist around the Y-axis.

The above-mentioned one or more reinforcement fibers or fiber bundles 28 is/are preferably formed by a number of unidirectional fibers (extending at least between the rigid members 20 along the indicated Y-direction), and can prevent the two rigid members 20 to move away from each other, in the indicated Y-direction. Thus, translational movement freedom is reduced, but pivoting (rotational freedom) can still be provided with this configuration. For example, the interlinking fibers 28 and optional intermediate member 20 can still be configured to allow rotation of the rigid members 20 with respect to each other, for example about the X-, Y- and Z-axis.

In the embodiment of Figure 6, the flexural joint 29 comprises a one-piece rigid (relatively stiff) element, having a curved part that comprises a plurality of subsequent U-shaped joint sections 30, in a sequence of alternately upright and upside down U-parts. The joint sections are pivotal with respect to each other. For example, the rigid element 30 can have a wave-shape, in front view, for example substantially a sinus-wave shape. Intermediate spaces enclosed by outer surfaces of the joint sections 30 can be filled or provided with a suitable flexible and preferably resilient material 31 (examples of such material are mentioned above). The joint 29 can be provided centrally with reinforcement fibers 38, extending in a predetermined Y-direction to limit translational freedom of movement in that direction Y. For example, these reinforcement fibers 38 can extend along a virtual XY-plane that runs centrally with respect to the alternating U-shaped sections 30. The rigid element 30 can be configured to be pivotal around to X-axis, and to resist rotation around the remaining orthogonal X-and Z-axis. To this aim, the rigid element can include further suitable directional fiber-reinforcement, and/or can have a relatively large thickness measured in the X-direction. In this embodiment, two outer surfaces of the curved element (i.e. U-shaped sections) 30 provide a plurality of pressure receiving surfaces 39 extending opposite each other, parallel to XZ-planes. The intermediate material 31 preferably contacts these pressure receiving surfaces 39 (i.e., is enclosed thereby when viewed along the Y-direction). Thus, the joint 29 can be capable to safely undergo relatively large bending loads and axial push loads.

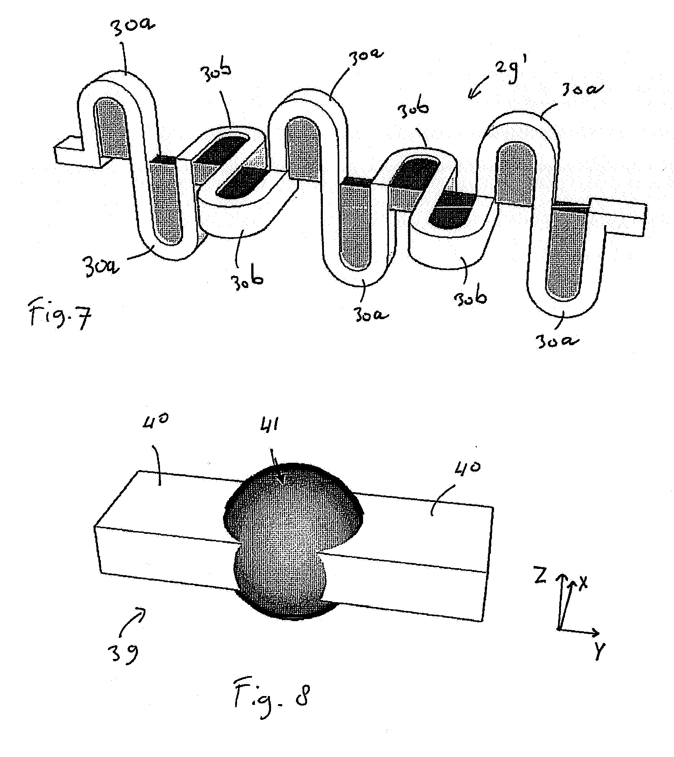

Figure 7 shows an alternative joint embodiment, which differs from the embodiment of Fig. 6 in that the flexural joint 29' comprises a plurality of subsequent U-shaped joint sections 30, in a sequence of alternately one upright and one upside down U-part 30a extending along a first virtual plane YZ and one upright and one upside down U-part 30b extending along a second virtual plane YX. The first and second virtual planes are perpendicular with respect to each other. In this way, the joint 29' can provide an extra rotational degree of freedom, compared to the embodiment of Fig. 6. The joint 29 can be provided centrally with (optional) reinforcement fibers, extending in a predetermined Y-direction to limit translational freedom of movement in that direction Y.

Figure 8 shows another embodiment of part of a flexural joint 39, comprising two rigid fiber reinforced members 40 being connected to each other by a flexible (preferably resilient) part 41, the flexible part 41 for example having a spherical shape; the flexible part 41 can optionally be provided with unidirectional fibers (not depicted as such). This joint 39 can provide three rotational degrees of freedom (along the X-, Y- and Z-axis). Preferably, unidirectional fibers (not depicted) extend centrally through the joint 39 (i.e. through the central flexible member 41), between the two rigid parts 40, for limiting translational movement in their direction.

Figures 9A-9C show embodiments of flexural joints, comprising interlinked chain members (or frame parts), and fiber reinforcement interconnecting the chain members. Herein, a preferred application of flexible matrix material embedding the fibers or fiber bundles that connect the chain members to each other, is entirely optional.

Fig. 9A shows a flexural joint 49 comprising a first rigid chain member 49a and a second rigid chain member 49b. Each chain member 49a, 49b can have various shapes (for example square or rectangular, as in this embodiment) and dimensions, as will be appreciated by the skilled person.

For example, each of the rigid members 49a, 49b as such can be made of rigid composite, fiber reinforced, material, preferably FRP. Therein, the fibers (not shown as such) can preferably be arranged to provide rigidity in three orthogonal directions X, Y, Z. Optionally, each chain member 49a, 49b can be provided with integral connection parts 53 to connect the chain member to another element or unit. For example, connection surfaces of these connection parts can be faced-away from each other in case of a non-rotated joint operational mode, as in the present embodiment and drawing.

The first and second rigid chain member 49a, 49b each enclose a respective chain member aperture 49c. Part of the second chain member 49b extends through the internal aperture 49c of the first chain member 49a, particularly with relatively large clearance. Similarly, part of the first chain member 49a extends through the aperture 49c of the second chain member 49b, particularly with relatively large clearance. For example, the chain members 49a, 49b do not make direct contact with each other.

Advantageously, reinforcement fibers (or fiber bundles) 58 are provided to connect the second chain member 49b to the first chain member 49a. Examples of suitable fiber material, to provide the fibers 58, are mentioned above. In this embodiment, the fibers 58 extend through the internal chain aperture of the first chain member and intersect the part of the second member 49b, to hold that second member 49b at predetermined distances from opposite internal surfaces of the first member 49a. Preferably, the fibers 58 are firmly connected to both the first and second member 49a, 49b. Also, preferably, the fibers 58 extend in a straight line. Particularly, the fibers 58 provide a firm positioning of the second chain member 49b with respect to the first chain member 49 in a respective longitudinal fiber direction Y. The resulting flexural joint 49 can only take up forces F1, F2 acting in the longitudinal fiber direction Y, but provides rotational freedom in three different orthogonal directions. A moment acting in any direction on the joint 49 will therefore lead to respective joint rotation. In this case, the configuration of the fibers 58 can be selected to determine the amount of rotational degree of freedom. For example, a relatively thick fiber bundle (or string) 58 can be applied to provide a relatively large resilience to rotation around the fiber bundle axis.

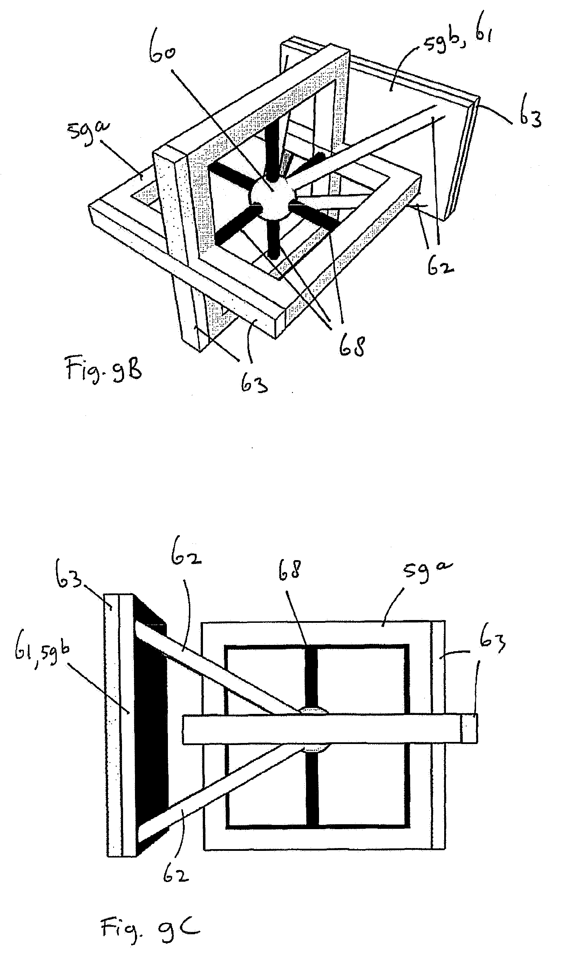

Figures 9B-9C show an embodiment, similar to the embodiment of Fig. 9a, but comprising at least one flexural joint having fiber reinforcement that is arranged to provide three rotational degrees of freedom, whilst blocking all translational degrees of freedom. The present embodiment comprises a first rigid chain structure 59a and a second rigid chain structure 59b being interlinked with respect to each other. Particularly, the first chain structure 59a has a rigid frame (for example of FRP) that defines an internal chain structure space. An attachment part 60 of the second structure 59b is located in that internal space, particularly spaced-apart from the first rigid chain structure 59a.

Reinforcement fibers (or fiber bundles) 68 are provided to connect the attachment part 60 of the second chain structure 59b to the first chain structure 59a, such that any translation of the attachment part 60 with respect to the first chain structure 59a is prevented, but still allowing the attachment part to rotate with respect to the first chain structure 59a. In the present embodiment, to that aim, fibers 68 are provided that extend in three orthogonal directions, the fibers 68 connecting the attachment part 60 to the rigid (outer) frame of the first structure 59a. In this embodiment, the fibers 68 extend through the internal space of the first chain structure 59a and intersect the attachment part 60, to hold that part 60 at predetermined distances from opposite internal surfaces of rod parts of the first structure 59a. Preferably, the fibers 68 extend in straight lines. In the present embodiment, the mentioned rod parts of the first chain structure 59a particularly extend at 6 sides, two for each orthogonal direction, along the respective interior space, opposite the attachment part 60, in mirror-symmetrical manner.

Besides, the second chain structure 59b comprises a frame part 61 extending outside the internal space of the first chain structure 59a, as well as a plurality of integral links 62 that interconnect the frame part 61 to the attachment part 60. For example, the links 62 extend along the outer contour of a virtual conical plane, preferably symmetrically with respect to a virtual centre line that intersects the attachment part 60. The rod parts of the first chain structure 59a are dimensioned to provide relatively large intermediate apertures, allowing the links 62 to pass to the attachment part 60, and providing additional space for the links to move during rotation of the joint.

In the present embodiment, each chain structure 59a, 59b is provided with integral connection parts 63, having connection surfaces that are faced-away from each other when the joint is in a non-rotated operational mode (as in the drawing).

Particularly, in the embodiment of Fig. 9B, 9C, the fibers 68 provide a firm translational positioning of the second chain member 59b with respect to the first chain member 49 in all directions, and allows rotation in all directions. In a preferred embodiment, the fibers 68 are embedded in a flexible enclosure or flexible material, preferably a resilient material, however, that is not essential. For example, the space enclosed or defined by the first rigid structure (which space comprises the fibers 68) can be substantially filled with a suitable elastic material, an elastic or resilient plastic, an elastomer, rubber (natural or synthetic), a flexible cured resin, or a different type of material.

### Further flexural joint and suspension system embodiments

Figures 10-13 show a further non-limiting embodiment of a flexural joint 105. A suspension system 101 is depicted, which differs from the system of Fig. 1-4 in that the system 101 comprises a central flexural joint 105 having four fiber bundles 108. As in the embodiment of Fig. 1, the present system 101 also comprises an elongated leaf spring 102 having integral transversal arms 115.

In this embodiment there can be provided an upper fibre bundle part 108a, extending upwardly after mounting, to connect the leaf spring 2 to a vehicle part. Also, there can be provided three lower fibre bundle parts 108b, extending divergently downwardly, to limit leaf spring translational freedom degrees after mounting.

Particularly, in this case, a first (for example non-pretensioned) fiber bundle 108 extends upwardly from the middle part of the leaf spring 102, to attach the leaf spring to a first rigid member 109a. A plurality of second fiber bundles 108b (three in this embodiment) extends in different directions downwardly, also from the middle part of the leaf spring 102, to attach the leaf spring to a second rigid member 109b. The second fibers 108b can limit translational freedom in a predetermined vertical direction Z, wherein their average direction coincides with that translational direction Z to be limited. For example, the three second fibers 108b can extend symmetrically along a virtual conical plane. Preferably, at least the second fiber bundles 108b are pretensioned; to this aim, the second rigid member 109b and middle part of the leaf spring 102 are preferably biased (pertensioned) in vertical direction Z with respect to each other (via non-depicted biasing (pretensioning) means, for example a spring, resilient matrix material or in a different manner).

After assembly, the second fiber bundles 108b can take up mass-forces (i.e. weight) of the vehicle chassis, as well as vertical wheelforce variations and lateral and longitudinal forces. The resulting flexural joint 105 can provide three rotational degrees of freedom, wherein a centre of rotation is determined by (virtual or non-virtual) intersection lines of the fiber bundles 108a, 108b.

Figure 11 depicts a heave mode of the embodiment of Fig. 10, wherein arrow Fz relates to gravity action force due to vehicle mass (taken up by the three lower fiber bundles 108b), and arrows Fr to reaction forces (both due to gravity and heave) on the wheels W. In this embodiment, the upper fiber bundle 108a will typically carry the unsprung weight of the suspension members and wheels when the vehicle body is lifted by means of a jack or when the wheels are simply loosing contact with the ground.

Figure 12 depicts loss of contact with the (road) surface. An arrow Ft indicates action force to the upper fiber bundle 108a due to,a.o., unsprung suspension mass. Arrows Fz2 indicates gravity action force due to wheel axle and wheel masses. The upper fiber bundle 108a can position the elongated leaf spring 102, or hold the spring 102 in a predetermined location, when during operation the wheels W have lost contact with a road surface K (see Fig. 12).

Figure 13 shows a roll mode of the Fig. 10 embodiment (roll is shown by an arrow R). In this embodiment, the centre of rotation is located at or near the upper frame part 109a and is determined by a the intersection of virtual extensions the fiber bundles 108a, 108b.

Figures 14-16 show an alternative with respect to the embodiment of Fig. 10-13, wherein the first flexural joint 205 as such still provides one translational degree of freedom (in transversal leaf spring direction X, i.e., a vehicle driving direction), in addition to the three orthogonal rotational degrees of freedom. In the embodiment of Fig. 14, the system 201 comprises a central flexural joint 205 having three fiber bundles 208. As in the embodiment of Fig. 1, the present system 101 also comprises an elongated leaf spring 202 having integral transversal arms 215, which can limit leaf spring freedom of movement in the X direction.

In this embodiment there can be provided an upper fiber bundle part 208a, extending upwardly after mounting, to connect the leaf spring 202 to a first rigid part 209a. Also, there can be provided two lower fiber bundle parts 208b, extending divergently downwardly. Particularly, in this case, two pre-tensioned second fiber bundles 208b extend in divergently downwardly, from the middle part of the leaf spring 202, to attach the leaf spring to 202 a second rigid member 209b. For example, all fiber bundles 208a, 208b can extend along the same virtual vertical plane. The two pretensioned lower fiber strings of bundles 208b can react vertical and transverse wheel forces during operation. A centre of rotation of the joint 205 is indicated with C_{R} in fig. 16.

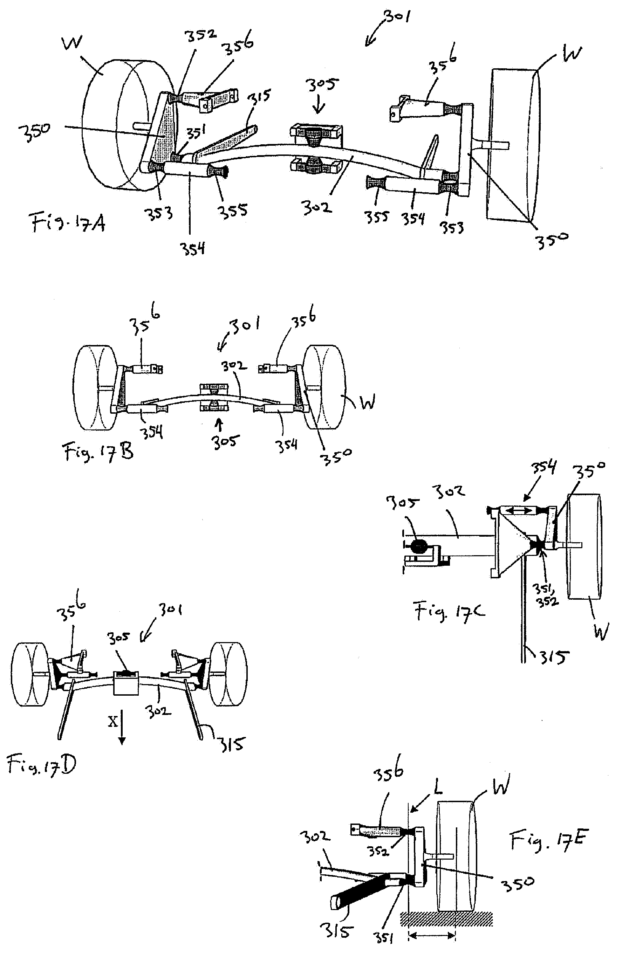

Figures 17-25 show several further embodiments 301, 401, 501, 601, 701 of advantageous integral suspension systems, including application of flexural joints.

Figures 17A-17E show different views of an embodiment 301, including an integral combination of the embodiment of Figures 1-3 with a double-wishbone configuration. The present embodiment 301 differs from the embodiment shown in Fig. 1 in that wheel axle carriers 350 (carrying wheel axles to hold the wheels W after assembly) are integrally connected to the opposite ends of the leaf spring 305. Preferably, both wheel axle carriers 350 are made in one-piece with the intermediate leaf spring 302. For example, each wheel axle can be made of rigid composite, fiber reinforced, material, preferably FRP. In the present embodiment, the leaf spring 302 has a relatively low position with respect to the wheel axle carriers 350 (particularly below virtual centre lines of the carriers 350, see Fig. 17B).

As a non-limiting example, each wheel axle carrier 350 can have a triangular shape (in side view), as in the drawing.

Each wheel axle carrier 350 is preferably provided with one or more second flexural joints (three in the present embodiment) 351, 352, 353. Each of these flexural joints 351, 352, 353 can be configured the same as or similar to above described flexural joint embodiments (see for example any of the embodiments of Figures 5-9A, 9B, 9C) or in a different manner. Thus, in the present embodiment, flexural joints provide durable, strong and light-weight connections between various vehicle components.

For example, the flexural joints 351, 352, 353 can each be configured to limit a number of translational degrees of freedom, and to provide a number of rotational degrees of freedom. In a further embodiment, one or more (for example each) of the flexural joints 351, 352, 353 is configured to provide three orthogonal rotational degrees of freedom (for example as in the embodiments of fig. 9).

Preferably, second flexural joints 351 are integrally provided to interconnect the leaf spring ends with the wheel axle carrier 350. In this embodiment, the second flexural joints 351 are located at or near lower part of the carriers 350.

Besides, in an embodiment further second flexural joints 352 can be included to connect the wheel axle carriers 350 to a respective upper support wishbone (the A-arm) 356; these further second joints 352 can for example be located at or near upper parts of the carriers 350. In a further embodiment, the upper wishbone 356 is also made in one piece with the wheel axle carriers 350, for example of the same (preferably composite FRP) material.

Preferably, each integral wheel axle carrier 350 also has an integral tracking rod 354, being connected to the wheel axle carrier 350 by a respective integral flexural joint 353. In the present embodiment, these joints 353 are located at or near lower part of the carriers 350. The tracking rod 354, respective wheel axle carrier 350 and respective integral flexural joint 353 are also preferably made in one-piece. Moreover, the tracking rod 354 can contain a further flexural joint 355 to couple a suitable steering mechanism or actuator (not depicted) thereto.

For example the tracking rods 354 can be included to provide active rear wheel steering functionality (for example as part of an Electronic Stability Program, ESP).

As is indicated in Fig. 17E, the upper and lower integral flexural joints 351, 352 of the wheel axle carrier 350 preferably are arranged in one line (L) with respect to each other, particularly a substantially vertical line L (see also Fig. 17C); the resulting line L is the so-called king pin axis (or steering axis).

The present embodiment can provide a so called 'caster offset' of zero, since respective flexural joints are located in one line, and -in side view- coincides with the wheels vertical centre lineAs a result, a good vehicle driving stability will be obtained. Besides, the load in an optional steering actuator can be reduced to a minimum amount.

Moreover, the present configuration can provide a very predictable, safe and comfortable vehicle turn behavior, since the configuration can provide a relatively low and stable vehicle roll centre, in combination with proper suspension roll-stiffness for a well balanced vehicle handling.

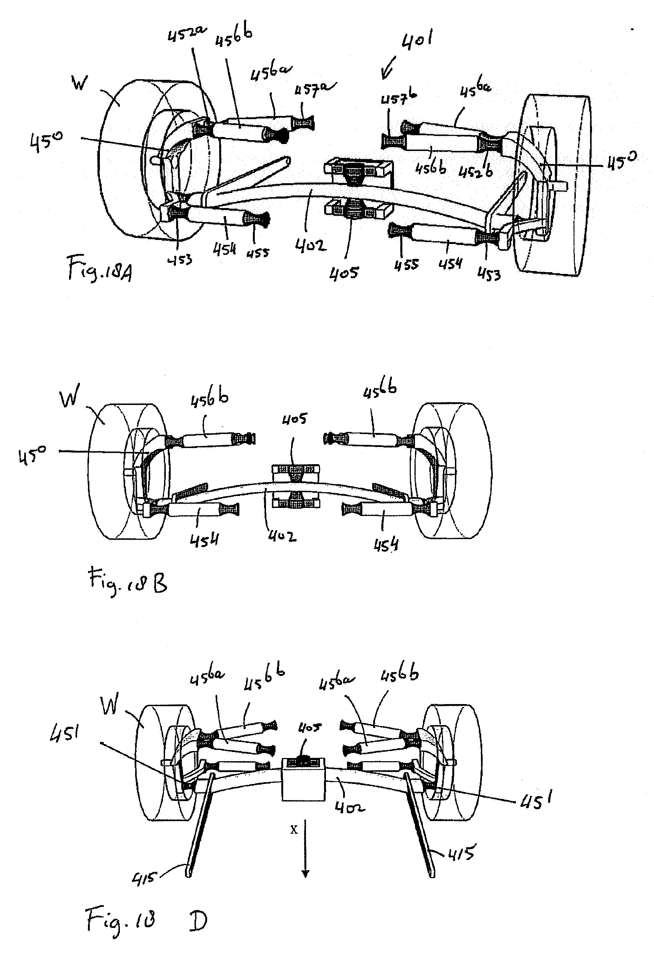

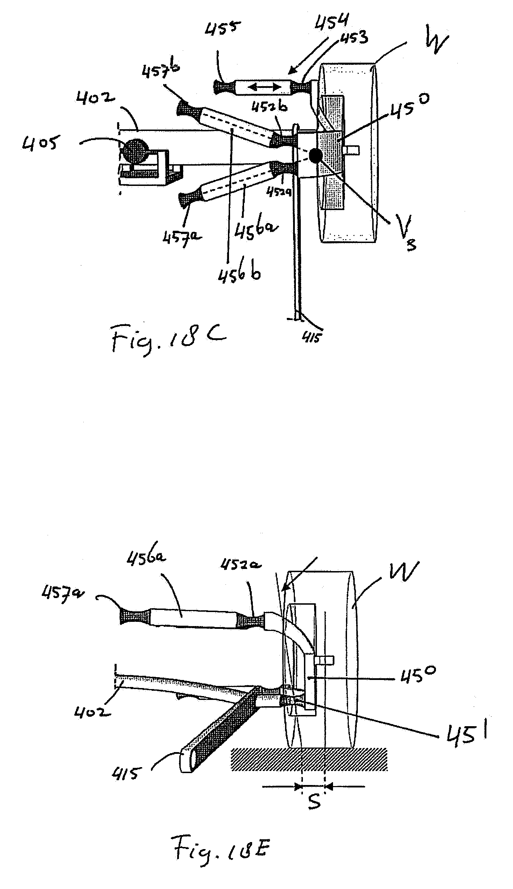

Figures 18A-18E show different views of an embodiment 401, including an integral combination of the embodiment of Figures 1-3 with a multi-link configuration. The embodiment of Fig. 18 differs from the embodiment of Fig. 17 in that the integral wheel axle carriers 450 each contain two integral upper bearing rods 456a, 456b. Also, there are provided integrally (preferably made in one piece with the suspension system 401) a leaf spring 402, a first flexural (central) joint 405, second flexural joints 451, 452a, 452b, 453, tracking rods 454, having further flexural joints 455 to couple an optional suitable steering mechanism or actuator (not depicted) thereto.

The present one-piece multi link suspension system 401 can provide further functionality, and more room for optimizing desired suspension characteristics. In a preferred embodiment, the present multi-link suspension system, 401, 402, 405, 450-457 is made entirely in once piece, from FRP. Besides, the system 401 includes a plurality of flexural joints 451, 452, 453, 455, 457. Each of these flexural joints can be configured the same as or similar to above described flexural joint embodiments (see for example the embodiments of Figures 5-9) or in a different manner.

In this embodiment, two upper flexural joints 452a, 452b, resp., are provided to connect the integral upper rods 456a, 456b, resp., to an upper part of a respective wheel carrier 450 (for example at the same vertical level). Inner end of the upper rods 456a, 456b are provided with respective, further, flexural joints 457a, 457b (see Fig. 18C), to connect these rods, for example, to a vehicle chassis part.

Preferably, the two integral rods 456a, 456b of each wheel axle carrier 450 are oriented such that they provide a virtual steering axis or point Vs in or near the lateral wheel centre (see Fig. 18C), so that in comparison with the embodiment of Figure 17, the steering axis can be located nearer to the vertical center line of the wheel plane. In this manner, the performance of a true 'center point' steering mechanism can be approximated with the advantages for vehicle handling and steering behaviour this entails. Particularly, the very small scrubb radius S (see Fig. 18E) contributes to improving the ride characteristics.

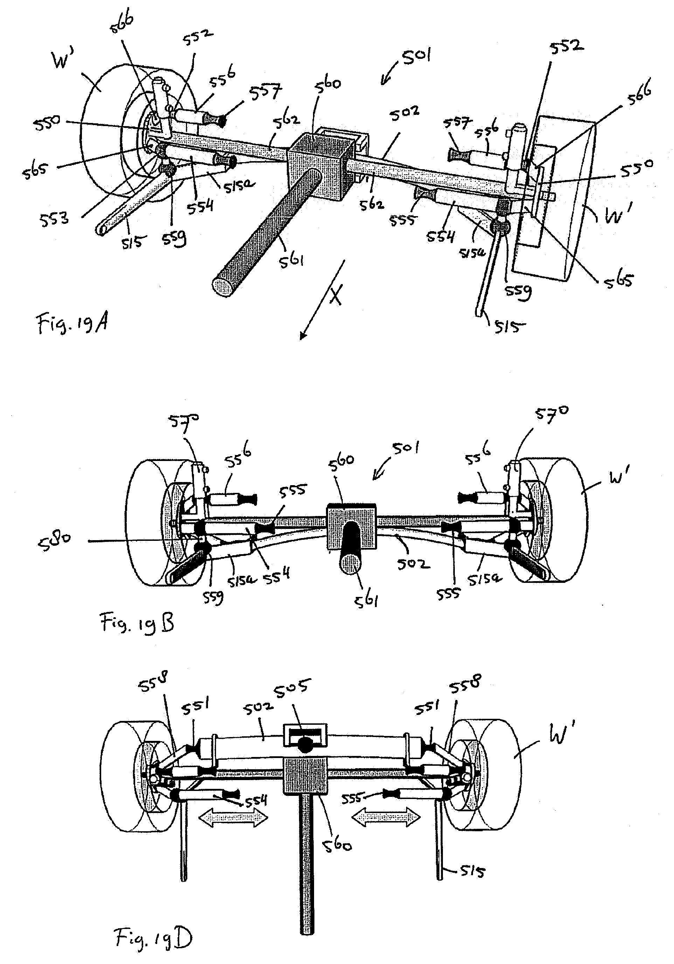

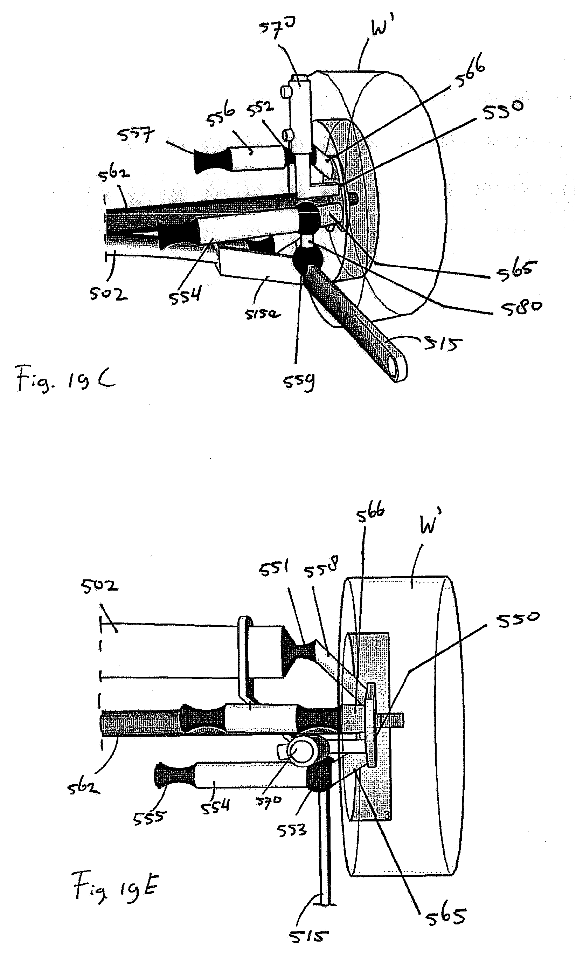

Figures 19A-19E, 20-22 show yet another embodiment of an integrally manufacturable suspension system 501, having a plurality of integral flexural joints. This system 501 is particularly adapted for rear driven vehicles, having a differential unit 560 (known as such to the skilled person), connecting a drive shaft assembly 561, 562 to the wheels. Fig. 19 shows two driven rear wheels W' and a suspension system 501 that integrally contains (preferably in one-piece, as in above-described embodiments): an elongated leaf spring 502 having a central flexural joint 505, integral transversal arms 515, and wheel axle carriers 550. In the present embodiment, the spring 502 extends behind the differential drive system 560, 561, 562 (viewed in top view, see Fig. 19D), for example substantially at a lower vertical level than rear driving shafts 562 (see Fig. 19B). The spring 502 extends substantially behind as well and below centre lines of the wheels W'.

The elongated leaf spring 502 is coupled to the carriers 550 with first lower arms 558 (being part of the wheel carrier body) and respective flexural joints 551 (see Fig. 19D, 19E). Due to the relatively low position of the leaf spring 502, the first arms 558 can preferably extend at a certain angle upwardly towards the wheel axle carrier units 550. Also, due to the backward position of the leaf spring 502, the first arms 558 preferably extend at a certain angle towards a vehicle front, viewed from the leaf spring to the wheel axle carrier units 550. Fig. 19E shows that the carrier 550 and first arm 558 can be substantially integrally, immovably, connected to each other.

The elongated leaf spring 502 and the two transversal arms 515 are integrally connected to each other via intermediate integral connecting members 515a of the arms 515 (see Fig. 19B). In the present embodiment, each intermediate members 515a includes an angle with a remaining part of the arms 515 (for example an angle in the range of about 20-70°), i.e., with the X-direction.

The embodiment also comprises tracking rods 554, having outer integral flexural joints 553 to connect the tracking rods 554 to wheel axle carrier parts 565, and inner integral flexural joints 555 that can be suitable for coupling a steering mechanism (not show) to the tracking rods 554. The afore-mentioned tracking rod wheel axle carrier parts 565 can be immovably fixed to the remaining part of the respective wheel axle carrier 550; in the present embodiment, these parts 565 are arms 565 that extend a certain angle towards a vehicle front, viewed from the wheel axle carrier 550 to the mentioned outer tracking rod joint 553. The wheel axle parts 565 can function to prevent rotation, about the vertical axis, of the respective wheel axle carrier 550, for example during vehicle braking or acceleration.

Also, there can be provided upper flexural joints 552 to connect integral upper wishbones (A arms) 556 (having integral inner flexural joints 557) to an upper part 566 of a respective wheel carrier 550 (see Fig. 19A); in this embodiment, said upper wheel carrier part 566 is an integral wheel carrier arm extending at an angle upwardly from a main wheel carrier part 550 to the respective upper rod joint 557.

Preferably, there can be included (passive or active damping) units 570 that are coupled to the wheel axle carriers 550 to provide active damping forces thereto.

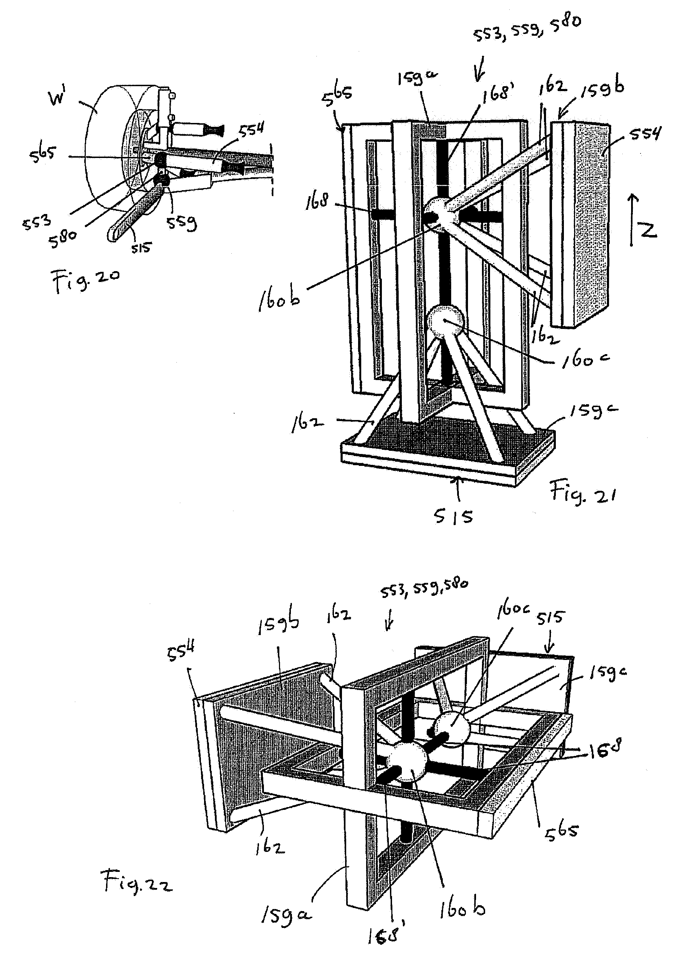

Moreover, the present system 501 is provided with (relatively short) connectors 580 extending between the transversal arms 515 and the tracking rod assemblies 554, 555. Particularly, each transversal arm 515 has been provided with an additional flexural joint 559 that has been provided with/receives a respective connector 580 (see Figs. 19B, 19C, 19E). Besides, in this embodiment, the connectors 580 link up with the outer integral Flexural joints 553 of the tracking rods. This is also depicted in Figures 20-22 (see below).

In the embodiment of Figure 19, the wishbones 556 and tracking rods 554 can provide lateral (i.e. lateral with respect to a driving direction X) stiffness to the suspension. Also, these elements 554, 556 can prevent camber and steering of the wheels. Besides, the tracking rods 554 can be coupled to an actuator mechanism, for actively steering the rear wheels W'. The damping units 570 can be controlled (by a suitable controller, not depicted) to provide active damping to improve driving stability and comfort during operation, for example during vehicle roll and/or heave.

As is mentioned above, flexural joints can be configured in various ways, for example similar to above-described embodiments. As a non-limiting example, figures 20-22 show an advantageous embodiment, wherein the flexural joints 553, 559 and connector 580 of the system 501, coupling a transversal arm 515, tracking rod 554 and wheel axle part 565, are integrated with each other. Particularly, these means 553, 559, 580 can be integrated in a flexural joint arrangement comprising interlinked chain members (or frame parts), and fiber reinforcement interconnecting the chain members. Herein, application of flexible matrix material embedding the fibers or fiber bundles that connect the chain members to each other, is entirely optional, but preferred. The embodiment shown in Figures 21-22 can also be applied in another field than suspension systems, as will be appreciated by the skilled person.

Figures 21-22 show that there can be provided a first rigid chain structure 159a and a second rigid chain structure 159b being interlinked with respect to each other. Moreover, in this embodiment, there is provided a third rigid chain structure 159c that is interlinked with the first rigid chain structure 159a. The first structure 159a is associated with the wheel carrier part 565, the second structure 159c is associated with the tracking rod 554 and the third structure 159c is associated with the transversal arm 515 (as has been schematically indicated in the drawing). For example, each chain structure 159a, 159b, 159c can be rigidly fixed to the respective suspension system part 565, 554, 515, or integrally contain the respective part 565, 554, 515.

Particularly, the first chain structure 159a has a rigid frame (for example of FRP) that defines an internal chain structure space. An attachment part 160b of the second structure 159b is located in that internal space, particularly spaced-apart from the first rigid chain structure 159a. An attachment part 160c of the third structure 159c is also located in that internal space, particularly spaced-apart from the first rigid chain structure 159a, and spaced apart from the other attachment part 160b.

Reinforcement fibers (or fiber bundles) 168 are provided to connect the attachment parts 160b, 160c of the second and third chain structure 159b, 159c to the first chain structure 159a, such that translation of the attachment parts 160b, 160c with respect to the first chain structure 159a is prevented, but still allowing each of the attachment parts to rotate with respect to the first chain structure 159a. In the present embodiment, to that aim, fibers 168 are provided that extend in three orthogonal directions, the fibers 168 connecting the attachment part 160b of the second chain structure to the rigid (outer) frame of the first structure 159a (as in the embodiment of Figures 9A-9C). In the present embodiment, one of the fiber parts 168' connects the two attachment parts 160b, 160c to each other; this fiber part particularly extends in a substantially vertical direction Z after mounting (see Fig. 20).

As in the embodiment of Fig. 9, rod parts of the first chain structure 159a particularly extend at 6 sides, two for each orthogonal direction, along the respective interior space, opposite the attachment parts 160, in mirror-symmetrical manner. Besides (see also Fig. 9), each of the second and third chain structure 159b, 159c can comprises a respective frame part extending outside the internal space of the first chain structure, as well as a plurality of integral links 162 that interconnect the frame part to the respective attachment part 160. Also in this case, the rod parts of the first chain structure 159a can be dimensioned to provide relatively large intermediate apertures, allowing the links 162 to pass to the respective attachment part 160b, 160c, and providing additional space for the links to move during rotation of the joint.

Particularly, in the embodiment of Fig. 9B, 9C, the fibers 168 provide a firm translational positioning of the second chain member 159b with respect to the first chain member 49 in all directions, and allows rotation of that member 159b in all directions.

Also, in the embodiment of Fig. 9B, 9C, the fibers 168 provide a firm translational positioning of the third chain member 159c with respect to the first chain member 49 in at least one direction (the Z-direction), and allows rotation of that member 159c in all directions. Particularly, the connection from the third (rigid) chain member 159c t the first member 159a can only limit vertical translational movement (Z direction), whereas the further two orthogonal directions (longitudinal X and lateral Y directions) are not blocked.

Particularly, the fibers 168 can extend along X, Y and Z directions, however, this is not essential. A flexural joint having interlinked chain members can also be provided with fibers extending in different directions, depending for example on desired flexural functionality and expected operational loading of the joint.

Figures 23-24 show an embodiment, wherein the suspension system 601 further comprises a subframe 690, the subframe 690 being adapted to be mounted to a vehicle chassis. The subframe 690 and suspension system 601 are preferably made in one-piece from fiber reinforced composite material, for example FRP, leading to a durable and light-weight construction. The light-weight construction can lead to improved road holding, improved comfort, lower fuel consumption and thus leading to a more environment friendly vehicle. For example, the suspension system 601 can include any of the above-described suspension systems. In the Fig. 23-24 embodiment, an integral combination of the embodiment 501 of Fig. 19 with the subframe 690 is depicted. The subframe 690 and suspension system 501 are integrally connected by a number of respective flexural joints 555, 557 (in this case, no optional active steering is applied). The subframe 690 can include a number of mounting units 691 (for example bolting units, or units 691 configured to receive rubber, steel and/or metal inserts) for mounting the subframe (with its suspension system 501) to a vehicle chassis. Particularly, the application of steel or metal inserts in combination with rubber bushings for vibration isolation (not shown as such) to couple the mounting units 691 to a vehicle chassis can be advantageous since it can reduce build up of stress.

As an example, the present embodiment only contains four mounting units 691, whereas the two transversal arms contain two respective mounting units 516, so that the integral suspension assembly 601 can be mounted swiftly and firmly to the vehicle chassis. In case the subframe 690 and suspension system 501 are made of the same composite material (for example FRP), application of metal or steel joints can be prevented, so that concentration or build-up of stress between the subframe and suspension system can be reduced or prevented. Besides, a much simpler construction can be provided, with respect to prior art systems.

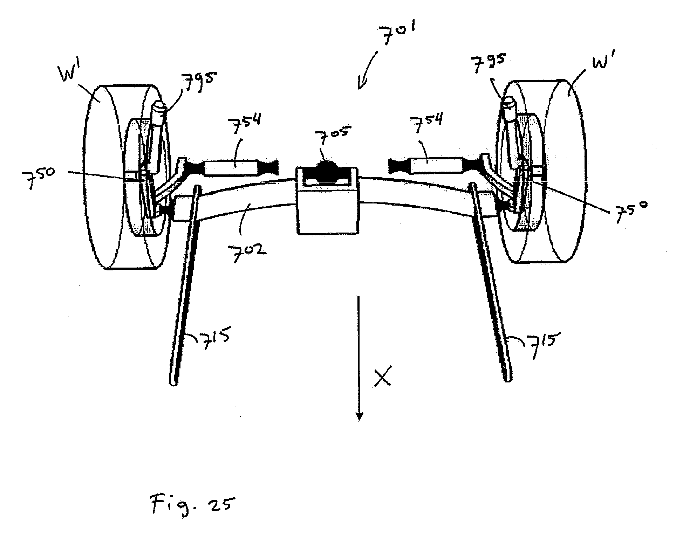

Fig. 25 is a perspective front view of a suspension embodiment 701 based on a MacPherson type of suspension, for example for suspension for rear wheels W' . The embodiment of Fig. 25 is integrally (in one-piece) provided with a leaf spring 702, central flexural joint 705, wheel axle carriers 750, transversal arms 715 and track rods 754 to provide active wheel steering. The present embodiment contains fixed dampers 795 that are immovably connected to the wheel carriers 750.

Advantages of the above-described embodiments include reduction of vehicle suspension costs and time, as well as providing vehicle manufacturing logistics due to a considerably reduction in components, and also providing more environment-friendly vehicles. Besides, present suspension systems 1, 101, 202, 303, 404, 501, 601, 701 can be joined to the vehicle chassis in a simple manufacturing step, reducing further overhead. The relatively light-weight suspension system can provide improved suspension characteristics, which can be tuned in a simple manner due to a very good decoupling of various aspects (such as anti-roll, heave, anti-dive). Besides (see Figures 17-19), active rear wheel steering can be implemented in a simple manner. Also, application of metal or steel joints can be prevented.

Besides, the embodiments of the flexural joints as such can provide durable and strong interconnections between several elements (for example elements of suspension systems, or other elements), whilst providing at least one orthogonal rotational degree of freedom as well as blocking at least one translational degree of freedom. Preferably, the joint as such can be made in one piece. Also, preferably, the joint is made in one piece with at least one of the elements that is to be connected to another element, by the joint (for example, the joint can be made in one piece with both elements).

Although the illustrative embodiments of the present invention have been described in greater detail with reference to the accompanying drawings, it will be understood that the invention is not limited to those embodiments. Various changes or modifications may be effected by one skilled in the art without departing from the scope or the spirit of the invention as defined in the claims.

It is to be understood that in the present application, the term "comprising" does not exclude other elements or steps. Also, each of the terms "a" and "an" does not exclude a plurality. Any reference sign(s) in the claims shall not be construed as limiting the scope of the claims.

For example, in the above examples, application of one or more flexural joints integrated in vehicle suspension systems has been described. However, the present invention is not limited to vehicle suspension systems at all. For example, a joint according to the invention can be applied in building industry, machines, various parts of various types of transportation systems (for example including vehicles, aircraft, trains and vessels), medical devices, an orthesis and/or prosthesis (for example to be worn and/or implanted by/in patients), and other applications

## Claims

1. Flexural joint configured to provide at least one orthogonal rotational degree of freedom and configured to block at least one translational degree of freedom, wherein the flexural joint consists of composite fiber-reinforced material.

2. Flexural joint according to claim 1, configured to provide at least two orthogonal rotational degree of freedom.

3. Flexural joint according to any of the preceding claims, configured to provide three orthogonal rotational degree of freedom.

4. Flexural joint according to any of the preceding claims, configured to block at least two translational degrees of freedom.

5. Flexural joint according to any of the preceding claims, configured to block all translational degrees of freedom.

6. Flexural joint according to any of the preceding claims, containing one or more reinforcement fibers to limit said at least one translational degree of freedom, and to allow said at least one orthogonal rotational degree of freedom.

7. Flexural joint according to any of the preceding claims, wherein the flexural joint comprises at least a part having unidirectional fibers, preferably being embedded in a flexible enclosure.

8. Flexural joint according to any of the preceding claims, the flexural joint comprising at least a first part and a second part, the first part having one or more fibers extending in a different direction than one or more fibers of the second part.

9. Flexural joint according to any of the preceding claims, wherein the flexural joint comprises rigid sections being interconnected by the one or more reinforcement fibers to limit freedom of movement of the rigid sections with respect to each other, the one or more reinforcement fibers preferably being embedded in flexible material.

10. Flexural joint according to claim 9, the flexural joint comprising a one-piece rigid element, being curved to provide subsequent joint sections that are pivotal with respect to each other.

11. Flexural joint according to any of the claims 1-9, comprising interlinked chain members, and fiber reinforcement interconnecting the chain members.

12. Flexural join according to claim 11, comprising a first rigid chain member and a second rigid chain member, wherein each chain member as such is made of rigid composite material, for example FRP.

13. Flexural joint according to claim 11 or 12, wherein at least the first rigid encloses a respective chain member aperture, wherein part of the second chain member extends through the internal aperture of the first chain member, wherein one or more reinforcement fibers or fiber bundles, extending internal chain aperture of the first chain member, connect the second chain member to the first chain member.

14. Flexural joint according to any of claims 11-13, provided with fiber reinforcement that is arranged to provide three rotational degrees of freedom of the second chain member with respect to the first chain member, the fiber reinforcement also being arranged to connect a part the second chain structure to the first chain member, such that at least two orthogonal translations of the part of the second chain member with respect to the first member are prevented.

15. Flexural joint according to any of claims 11-14, wherein the fiber reinforcement that interconnects the chain members, is embedded in a flexible enclosure or flexible material, preferably a resilient material.

16. Flexural joint according to any of claims 1-8, integrally comprising a rigid frame part, a flexible part comprising flexible material, and fiber reinforcement, the fiber reinforcement being arranged to provide a number of orthogonal rotational degrees of freedom of the flexible part with respect to the rigid frame part, while blocking translational freedom between the flexible part and the rigid frame part.

17. Flexural joint according to claim 16, comprising a fiber web provided with first and second fiber parts, wherein a first fiber part extends through flexible material in a first direction to block freedom of translation in the first direction, wherein the second fiber parts branch off from the first fiber part to block a freedom of translation in a second direction that is orthogonal to the first direction.

18. Flexural joint according to any of the preceding claims, wherein the flexural joint at least comprises a first fiber or fiber bundle, extending in a first direction, and at least two second fibers or fiber bundles extending divergently with respect to each other, wherein an average direction of the second fibers or fiber bundles is opposite to said first direction of the first fiber or fiber bundle.

19. Method for manufacturing a flexural joint according to any of the preceding claims, wherein the flexural joint is made completely from fiber-reinforced composite material.

20. Assembly comprising at least a first element, a second element and at least one joint according to any of the claims 1-18 to connect the first and second element to each other, wherein the joint is preferably made in one piece with at least one of the first and second element.
